# EUROPÄISCHE PATENTANMELDUNG

(11) **EP 2 884 004 A2**
(43) Veröffentlichungstag der Anmeldung: **17.06.2015**
(21) Anmeldenummer: 14194416.5
(22) Anmeldetag: 23.11.2014
(51) Int. Cl.: E02B 3/10, E02B 3/16, E04H 17/20, E02B 7/22, E02B 7/54

(54) **Stützpfosten für eine Wand oder einen Zaun sowie Wand oder Zaun und Wand-Zaun-Kombination**

(30) Priorität: 22.11.2013 DE 102013112912; 13.02.2014 DE 102014101780
(71) Anmelder: Gross, Mathias, 39446 Staßfurt (DE)
(72) Erfinder: Gross, Mathias, 39446 Staßfurt (DE)
(74) Vertreter: Thienemann, Henning

(57) **Zusammenfassung**

Die Erfindung betrifft einen Stützpfosten (1) für eine Wand (28), insbesondere Hochwasserschutzwand, aufweisend wenigstens zwei parallel zueinander und beabstandet voneinander angeordnete Schenkel (2, 3), zwischen denen zur Aufstellung der Wand (28) ein Randabschnitt (31, 32) von zumindest einem Wandelement (30) anordbar ist, und wenigstens ein parallel zur Längserstreckung des Stützpfostens (1) verlaufend zwischen einem Schenkel (2, 3) und dem Randabschnitt (31, 32) des Wandelementes (30) anordbares Dichtelement (4, 5), gekennzeichnet durch wenigs-tens ein parallel zur Längserstreckung des Stützpfostens (1) verlaufend zwischen dem Schenkel (2, 3) und dem Randabschnitt (31, 32) des Wandelementes (30) anordbares separates Profil (9, 10), an dessen dem Schenkel (2, 3) abgewandter Seite das Dichtelement (4, 5) angeordnet ist, wobei die aus dem Dichtelement (4, 5) und dem separaten Profil (9, 10) gebildete Baugruppe (11, 12) derart ausgebildet ist, dass sie unter Erzeugung einer auf das Dichtelement (4, 5) einwirkenden Klemmkraft quer zur Längserstreckung des Stützpfostens (1) zwischen den Schenkel (2, 3) und den Randabschnitt (31, 32) des Wandelementes (30) einführbar ist.

## Beschreibung

Die Erfindung betrifft einen Stützpfosten für eine Wand, insbesondere Hochwasserschutzwand, oder einen Zaun, aufweisend wenigstens zwei parallel zueinander und beabstandet voneinander angeordnete Schenkel, zwischen denen zur Aufstellung der Wand bzw. des Zauns ein Randabschnitt von zumindest einem Wandelement bzw. einem Zaunelement anordbar ist.

Des Weiteren betrifft die Erfindung eine Wand, insbesondere Hochwasserschutzwand, oder einen Zaun bzw. eine Hochwasserschutzwand-Zaun-Kombination, aufweisend wenigstens zwei gegeneinander abgedichtet und formschlüssig miteinander verbindbare Wandmodule bzw. Zaunmodule und zumindest zwei Stützpfosten, an denen die Wandmodule bzw. Zaunmodule zur Aufstellung der Wand bzw. des Zauns anordbar sind, wobei an einem Wandmodul bzw. Zaunmodul eine Feder oder ein Vorsprung und an dem anderen Wandmodul bzw. Zaunmodul eine komplementär zu der Feder ausgebildete Nut oder Aussparung angeordnet ist, wodurch die Wandmodule bzw. Zaunmodule miteinander verbindbar sind.

Ferner betrifft die Erfindung eine Wand, insbesondere Hochwasserschutzwand, oder einen Zaun, aufweisend wenigstens zwei gegeneinander abgedichtete miteinander verbindbare Wandmodule bzw. Zaunmodule und zumindest zwei Stützpfosten, an denen die Wandmodule bzw. Zaunmodule zur Aufstellung der Wand bzw. des Zauns anordbar sind.

Aus der Gebrauchsmusterschrift DE 295 11 633 U1 ist eine mobile Hochwasserschutzwand aus mehreren im Wesentlichen wasserundurchlässig zusammengesetzten Elementen bekannt, welche an vertikal ausgerichteten Verbindungselementen befestigbar und unter Ausbildung einer Nut-Feder-Verbindung miteinander verbindbar sind.

Hochwasserschutzwände sind in verschiedenen Ausführungsformen bekannt. Eine solche Hochwasserschutzwand kann mehrere Stützpfosten aufweisen, welche seitlich mit U-förmig ausgebildeten Aufnahmen versehen sind, in die Randabschnitte von Wandelementen eingeführt werden können. An den Stützpfosten sind üblicherweise Dichtungen angeordnet, welche zum Abdichten einer solchen Hochwasserschutzwand mit den in die Aufnahmen eingeführten Randabschnitten der Wandelemente zusammenwirken.

Bei der Aufstellung einer entsprechenden Hochwasserschutzwand werden die Wandelemente von oben zwischen zwei benachbart zueinander angeordnete Stützpfosten eingeführt, wodurch die Randabschnitte in die Aufnahmen an den Stützpfosten eingeführt werden. Bei diesem Einführen eines Wandelementes zwischen zwei Pfosten kommt das Wandelement nahezu zwangsläufig mit den Dichtungen in Kontakt, wodurch die Dichtungen beschädigt werden können, was wiederum zu Undichtigkeiten an einer entsprechend ausgebildeten Hochwasserschutzwand führt. Dieses Problem tritt insbesondere bei der Einführung von relativ großen Wandelementen, beispielsweise mit Hilfe eines Krans, zwischen zwei Stützpfosten auf.

Aufgabe der Erfindung ist es, eine sowohl stationär als auch mobil einsetzbare Wand bzw. einen sowohl stationär als auch mobil einsetzbaren Zaun bzw. Zaun-Wand-Kombination bereitzustellen, welche bzw. welcher in seiner Formgebung auf einfache Art und Weise veränderbar ist und gleichzeitig als höchst zuverlässiger Hochwasserschutz einsetzbar ist. Aufgabe der Erfindung ist es auch, eine Möglichkeit zur zuverlässigen und dauerhaften Abdichtung von Wänden, insbesondere Hochwasserschutzwänden, zu schaffen.

Diese Aufgabe wird durch einen Stützpfosten gemäß Anspruch 1, eine Wand gemäß Anspruch 10 und eine Wandmodul gemäß Anspruch 16 gelöst. Vorteilhafte Ausgestaltungen sind in den Unteransprüchen angegeben, welche jeweils für sich genommen oder in verschiedener Kombination miteinander einen Aspekt der Erfindung darstellen können.

Mit Anspruch 1 wird ein Stützpfosten für eine Wand, insbesondere Hochwasserschutzwand, vorgeschlagen, aufweisend wenigstens zwei parallel zueinander und beabstandet voneinander angeordnete Schenkel, zwischen denen zur Aufstellung der Wand ein Randabschnitt von zumindest einem Wandelement anordbar ist, und wenigstens ein parallel zur Längserstreckung des Stützpfostens verlaufend zwischen einem Schenkel und dem Randabschnitt des Wandelementes im Anwendungsfall angeordnetes Dichtelement, gekennzeichnet durch wenigstens ein parallel zur Längserstreckung des Stützpfostens verlaufend zwischen dem Schenkel und dem Randabschnitt des Wandelementes im Anwendungsfall angeordnetes separates Profil, an dessen dem Schenkel abgewandter Seite das Dichtelement angeordnet ist, wobei die aus dem Dichtelement und dem separaten Profil gebildete Baugruppe derart ausgebildet ist, dass sie unter Erzeugung einer auf das Dichtelement einwirkenden Klemmkraft quer zur Längserstreckung des Stützpfostens zwischen den Schenkel und den Randabschnitt des Wandelementes im Anwendungsfall eingeführt ist.

Erfindungsgemäß ist das Dichtelement nicht an einem Schenkel, sondern an einem separat ausgebildeten Profil angeordnet und kann somit nach einer Einführung eines Randabschnitts eines Wandelementes zwischen die beiden Schenkel des Stützpfostens zwischen dem jeweiligen Schenkel und dem Randabschnitt angeordnet werden. Folglich kann es bei der Einführung des Randabschnitts zwischen die beiden Schenkel nicht zu einem Kontakt zwischen Randabschnitt und Dichtelement kommen, so dass eine hierdurch bedingte Beschädigung des Dichtelementes, wie sie aus dem Stand der Technik bekannt ist, nicht auftreten kann. Somit kann mittels des erfindungsgemäßen Stützpfostens eine Wand, insbesondere Hochwasserschutzwand, geschaffen werden, die zuverlässig und dauerhaft abgedichtet ist.

Der Stützpfosten kann im Rahmen der Erfindung auch zwei oder mehrere Paare von parallel zueinander und beabstandet voneinander angeordneten Schenkeln aufweisen, zwischen denen zur Aufstellung der Wand jeweils ein Randabschnitt von zumindest einem Wandelement anordbar ist. Auch kann zwischen jedem Schenkel und einem Randabschnitt eines Wandelementes ein parallel zur Längserstreckung des Stützpfostens verlaufend anordbares Dichtelement vorhanden sein.

Des Weiteren kann der Stützpfosten auch zwei oder mehrere parallel zur Längserstreckung des Stützpfostens verlaufend zwischen einem Schenkel und einem Randabschnitt des Wandelementes im Anwendungsfall angeordnete separate Profile aufweisen, an deren jeweilig einem Schenkel abgewandter Seite jeweils ein Dichtelement angeordnet ist.

Vorzugsweise erstrecken sich das Dichtelement und das separate Profil über die gesamte Länge des jeweiligen Schenkels. Das Dichtelement kann aus einem Elastomer, insbesondere aus Gummi, gebildet sein.

An dem separaten Profil kann eine Aufnahme zur Fixierung des Dichtelementes relativ zu dem separaten Profil angeordnet sein, in der ein Teil des Dichtelementes formschlüssig eingreift. Vorzugsweise ist das Dichtelement austauschbar an der Aufnahme angeordnet, so dass durch die jeweilige Wahl der Art des Dichtelementes der Stützpfosten an die jeweiligen Gegebenheiten anpassbar ist und im Fall eines beschädigten Dichtelementes ein einfacher und schneller Austausch gegen ein neues Dichtelement erfolgen kann.

Durch die Erzeugung einer auf das Dichtelement einwirkenden Klemmkraft wird die Abdichtung einer entsprechend ausgebildeten Wand, insbesondere Hochwasserschutzwand, deutlich verbessert.

Gemäß einer vorteilhaften Ausgestaltung weist der Stützpfosten wenigstens eine Klemmeinrichtung mit zumindest einem Klemmglied auf, die derart ausgebildet ist, dass ein Teil des zwischen dem Schenkel und dem Randabschnitt des Wandelementes eingeführten separaten Profils zwischen dem Klemmglied und dem Schenkel einklemmbar ist. Hierdurch kann das separate Profil, und mit ihm das daran angeordnete Dichtelement, an dem übrigen Stützpfosten in seiner bestimmungsgemäßen Stellung fixiert werden. Dies geht mit einer dauerhaften und zuverlässigen Abdichtung einer entsprechend ausgestatteten Wand, insbesondere Hochwasserschutzwand, einher.

Vorteilhafterweise weist das Klemmglied einen freien Endabschnitt und einen mit dem separaten Profil oder mit einem die beiden Schenkel miteinander verbindenden Steg verbundenen Endabschnitt auf, wobei das Klemmglied derart ausgebildet ist, dass zumindest ein Teil des freien Endabschnitts bei zwischen dem Schenkel und dem Randabschnitt des Wandelementes eingeführten separaten Profils in körperlichem Kontakt mit einem an dem separaten Profil ausgebildeten Klemmabschnitt steht, wodurch der freie Endabschnitt über den Klemmabschnitt in Richtung des Schenkels mit einer Klemmkraft beaufschlagt wird. Hierdurch wird bei der Anordnung des separaten Profils zwangsläufig eine Klemmkraft erzeugt, welche über das Klemmglied auf das von der Klemmeinrichtung eingeklemmte Teil des separaten Profils übertragen werden kann. An dem freien Endabschnitt des Klemmglieds und dem Klemmabschnitt des separaten Profils können Abschrägungen zur Begünstigung des Zusammenwirkens von Klemmglied und Klemmabschnitt angeordnet sein. Vorzugsweise ist der freie Endabschnitt des Klemmglieds als von dem Schenkel weg gerichtete Abwinklung ausgebildet. Dies stelle eine optimale Ausgestaltung zur Erzeugung der auf das Klemmglied bzw. den Teil des separaten Profils einwirkenden Klemmkraft dar. Alternativ kann das Klemmglied abgerundet oder dergleichen ausgebildet sein.

Nach einer weiteren vorteilhaften Ausgestaltung ist zwischen dem mit dem separaten Profil bzw. dem Steg verbundenen Endabschnitt und dem Schenkel eine Aufnahme ausgebildet, in die der Teil des separaten Profils einführbar ist, wobei an der dem Schenkel abgewandten Seite des freien Endes des zwischen dem Klemmglied und dem Schenkel einklemmbaren Teils des separaten Profils eine Abschrägung angeordnet ist. Mittels der Abschrägung wird die Einführung des Teils des separaten Profils in die Aufnahme erleichtert. Die Abschrägung kann als Fase, Abrundung oder dergleichen ausgebildet sein.

Eine weitere vorteilhafte Ausgestaltung sieht vor, dass an der dem separaten Profil abgewandten Seite des Dichtelementes wenigstens eine Dichtlippe angeordnet ist. Hierdurch wird die Dichtwirkung des Dichtelementes erhöht. An der dem separaten Profil abgewandten Seite des Dichtelementes können auch zwei oder mehrere Dichtlippen angeordnet sein.

Gemäß einer weiteren vorteilhaften Ausgestaltung weist der Stützpfosten wenigstens ein parallel und beabstandet zur Längserstreckung des Stützpfostens anordbares, mit den Schenkeln verbindbares Versteifungsprofil auf. Dieses Versteifungsprofil kann dem Stützpfosten hohe Steifigkeitseigenschaften verleihen. Das Versteifungsprofil kann als Hohlprofil und/oder im Querschnitt wabenförmig ausgebildet sein.

Nach einer weiteren vorteilhaften Ausgestaltung umfasst der Stützpfosten wenigstens ein mit zumindest einem Schenkel und/oder dem Versteifungsprofil verbindbares Abdeckelement. Hierdurch kann der von einer entsprechend ausgebildeten Wand beim Betrachter hervorgerufene optische Eindruck verbessert werden, indem der Wand eine ästhetischere Anmutung verliehen wird.

Ferner wird es als vorteilhaft erachtet, wenn der Stützpfosten wenigstens eine sicherbare Verriegelungseinheit aufweist, mit der das separate Profil und der Randabschnitt des Wandelementes an wenigstens einem Schenkel arretierbar sind. Hierdurch kann eine Diebstahlsicherung ausgebildet werden, da das separate Profil bei gesicherter Verriegelungseinrichtung nicht dem übrigen Stützprofil entnommen werden kann. Dies ist insbesondere bei separaten Profilen aus Metall von Vorteil, da einem aus anderen Bereichen bekanntem Metalldiebstahl vorgebeugt werden kann. Die sicherbare Verriegelungseinheit kann ein Zylinderschloss, einen Druckzylinder, ein Einsteckschloss, einen Bolzen mit Vorhängeschutz oder dergleichen aufweisen. Eine entsprechende Verriegelungseinrichtung kann auch bei andersartig modular aufgebauten Stützpfosten eingesetzt werden, um eine entsprechende Diebstahlsicherung auszubilden. Des Weiteren kann durch die Anordnung von entsprechenden Verriegelungseinheiten an Wänden in Form von Hochwasserschutzwänden ein Einbruchschutz für Häuser und Gebäude ausgebildet werden, wenn mittels einer solchen Wand eine Tür- Tor-, oder Fensteröffnung in einer Wand eines Hauses bzw. Gebäudes verschlossen wird. Unbefugten Personen ist es durch die mit den Verriegelungseinheiten bewirkten Arretierungen der Komponenten der Hochwasserschutzwand nicht möglich, eine entsprechende Wand wieder zu zerlegen und so Zugang zu einem Haus oder Gebäude zu bekommen. Dies ist von Vorteil, da es bei einer Hochwasser-Gefährdung in der Regel zu einer Evakuierung von Häusern und Gebäuden kommt. Hierdurch könnten unbefugte Personen einen ungehinderten Zugang zu leerstehenden Häusern und Gebäuden bekommen, was jedoch mit den erfindungsgemäßen Stützpfosten bzw. einer damit ausgestatteten Hochwasserschutzwand zuverlässig verhindert werden kann.

Ein auch selbständig erfinderischer Stützpfosten für eine Wand, insbesondere Hochwasserschutzwand, oder einen Zaun wird an dieser Stelle vorgeschlagen. Dieser kann auch die erfindungsgemäßen Merkmale aufweisen, aber auch lediglich wenigstens zwei parallel zueinander und beabstandet voneinander angeordnete Schenkel aufweisen, zwischen denen zur Aufstellung der Wand bzw. des Zauns ein Randabschnitt von zumindest einem Wandelement bzw. einem Zaunelement anordbar ist, und welcher wenigstens eine Stelleinrichtung umfasst, die derart ausgebildet und mit den Schenkeln verbunden ist, dass mit ihr der Abstand der Schenkel voneinander zum Einklemmen des zwischen den Schenkeln angeordneten Randabschnitts zwischen den Schenkeln variierbar ist. Herkömmliche Stützpfosten, welche eine Stelleinrichtung zur Variierung des Abstandes der Schenkel besitzen funktionieren meist nur, wenn beidseitig Randabschnitte eines Wandelementes oder Zaunelementes angeordnet werden. Der hier vorgeschlagene auch selbständig erfinderische Stützpfosten kann auch lediglich zwei Schenkel besitzen und dennoch ein sicheres Abdichten zwischen dem Stützpfosten und dem Wandelement bzw. Zaunelement ermöglichen, denn er weist neben der Stelleinrichtung wenigstens eine Führungseinrichtung auf, die derart ausgebildet und angeordnet ist, dass mit ihr der wenigstens eine Schenkel, dessen Abstand zu der Basiseinheit variierbar ist, während einer Bewegung dieses Schenkels relativ zu der Basiseinheit zwangsgeführt wird. Dies sichert die Aufbringung einer gewünschten Klemmkraft bei einer Variation des Abstandes der Schenkel voneinander, insbesondere da durch die Zwangsführung ein die jeweilige Klemmkraft verringerndes Verkanten des Schenkels verhindert wird. Mittels des Stellmechanismus können auch beide Schenkel relativ zu der Basiseinheit verstellt werden. Der Stützpfosten kann für jeden Schenkel eine eigene Führungseinrichtung oder für zwei oder mehrere Schenkel eine gemeinsame Führungseinrichtung aufweisen. Diese Zwangsführung ist auch Vorteilhaft bei zwei paarweisen Schenkeln des Stützpfostens. Insbesondere, wenn zwischen zwei Schenkel - obgleich vorhanden - kein Randabschnitt eines Wandelements eingeführt worden ist. In diesem Zusammenhang ist mit Zwangsführung eine Vorrichtung bzw. Merkmal zu verstehen, welches eine zusätzliche Führung neben der Stelleinheit darstellt und ein sicheres Einklemmen eines Randabschnittes auf nur einer Seite des Stützpfostens ermöglicht. Besonders bevorzugt wird die Zwangsführung durch einen Zapfen realisiert, der in eine Aussparung eingreift.

Gemäß einer vorteilhaften Ausgestaltung weist die Stelleinrichtung wenigstens einen Schraubmechanismus auf. Dies stellt eine konstruktiv einfache Ausgestaltung des Stellmechanismus dar. Der Stellmechanismus kann auch zwei oder mehrere Schraubmechanismen aufweisen. Über den Schraubmechanismus lässt sich der Abstand der Schenkel voneinander sehr exakt variieren, wobei gleichzeitig eine Erzeugung von ausreichenden Klemmkräften auf einfache Art und Weise ermöglicht wird.

Nach einer weiteren vorteilhaften Ausgestaltung ist an einer dem jeweilig anderen Schenkel zugewandten Seite von wenigstens einem Schenkel zumindest eine wenigstens über einen Teil der Länge des Schenkels verlaufende Dichtung angeordnet. Hierdurch kann der mit der Dichtung versehene Schenkel gegenüber einem Wandelement bzw. Zaunelement abgedichtet werden. Auch kann an jedem Schenkel eine entsprechende Dichtung angeordnet sein, um die Dichtheit einer entsprechend ausgebildeten Wand bzw. eines entsprechend ausgebildeten Zauns zu erhöhen. Des Weiteren können an einem Schenkel auch zwei oder mehrere parallel verlaufenden Dichtungen angeordnet sein. Vorzugsweise erstreckt sich die Dichtung über die gesamte Länge des Schenkels. Die Dichtung kann aus einem Elastomer, insbesondere aus Gummi gebildet sein.

Vorteilhafterweise ist an wenigstens einem Schenkel zumindest eine Aufnahme zum Halten der Dichtung angeordnet. Die Aufnahme kann eine Fixierung der Dichtung relativ zu dem jeweiligen Schenkel ermöglichen. Vorzugsweise ist die Dichtung austauschbar an der Aufnahme angeordnet, so dass durch die jeweilige Wahl der Art der Dichtung der Stützpfosten an die jeweiligen Gegebenheiten anpassbar ist und im Fall einer beschädigten Dichtung ein einfacher und schneller Austausch gegen eine neue Dichtung erfolgen kann.

In einer weiteren vorteilhaften Ausführungsform ist vorgesehen, dass der Stützpfosten wenigstens eine sich in Längsrichtung des Stützpfostens erstreckende Basiseinheit aufweist, an der die Schenkel zerstörungsfrei lösbar angeordnet sind, wobei der Abstand von wenigstens einem Schenkel zu der Basiseinheit mittels der Stelleinrichtung variierbar ist. Der Stützpfosten kann zwei entsprechende Paare von Schenkeln aufweisen, wobei zwischen jedem Paar ein Randabschnitt eines Wandelementes bzw. Zaunelementes einklemmbar ist. Wird ein entsprechender Stützpfosten beispielsweise als Endpfosten einer Wand bzw. eines Zauns eingesetzt, kann zur Schaffung einer ästhetischeren Anmutung der Wand bzw. des Zauns das nicht benötigte Paar von Schenkeln zerstörungsfrei von dem Stützpfosten gelöst und von diesem entfernt werden. Der Schraubmechanismus des Stellmechanismus kann teilweise an der Basiseinheit angeordnet und geführt sein. Vorzugsweise sind die Schenkel über jeweils eine Presspassung kraftschlüssig mit der Basiseinheit verbunden oder Teil dieser.

Durch die erfindungsgemäße Ausgestaltung des Stützpfostens kann folglich eine Wand bzw. ein Zaun als Bausatz bereitgestellt werden, welche bzw. welcher insbesondere auch von einem Verbraucher auf einfache Art und Weise mit einer geeigneten und gewünschten Formgebung aufgestellt, versetzt und in seiner Formgebung verändert werden kann. Die Wand bzw. der Zaun kann stationär eingesetzt und in seiner Formgebung verändert werden. Alternativ kann die Wand bzw. der Zaun mobil eingesetzt werden, insbesondere um eine Hochwasserschutzwand auszubilden, da die Montage der Wand bzw. des Zauns einfach und schnell möglich ist.

Beispielsweise kann auch mittels erfindungsgemäßer Stützpfosten ein Zaun mit einer gewünschten Formgebung aufgestellt werden, welcher bei Bedarf auf einfache Art und Weise und schnell zu einer Hochwasserschutzwand umgebaut werden kann, und umgekehrt. Eine Änderung der Formgebung einer solchen Wand bzw. eines solchen Zauns kann jedoch auch aus rein ästhetischen Gründen vorgenommen werden. Auch kann die Formgebung einer Wand bzw. eines Zauns unter Verwendung von erfindungsgemäßen Stützpfosten auf einfache Art und Weise an die jeweiligen Anforderungen beispielsweise bezüglich der Undurchlässigkeit für bestimmte Tierarten angepasst werden.

Eine weitere vorteilhafte Ausgestaltung für alle Arten der hier beschriebenen Stützpfosten sieht vor, dass der Stützpfosten wenigstens eine Verspanneinrichtung aufweist, die derart ausgebildet und angeordnet ist, dass mit ihr das Wandelement bzw. das Zaunelement mit einer zum Boden gerichteten Kraft beaufschlagbar ist. Hierdurch kann das wenigstens eine Wandelement bzw. Zaunelement gegen den Boden gepresst werden, um beispielsweise eine Hochwasserschutzwand auszubilden, ohne dass Wasser zwischen dem Wandelement bzw. Zaunelement und dem Boden durch die Wand bzw. den Zaun durchtreten kann. Die Verspanneinrichtung kann wenigstens einen zum Verspannen eingerichteten Schraubmechanismus aufweisen.

Mit Anspruch 10 wird eine Wand, insbesondere Hochwasserschutzwand, oder ein Zaun oder eine Schutzwand-Zaun-Kombination vorgeschlagen, aufweisend wenigstens zwei gegeneinander abgedichtet und formschlüssig miteinander verbindbare Wandmodule bzw. Zaunmodule und zumindest zwei Stützpfosten, an denen die Wandmodule bzw. Zaunmodule zur Aufstellung der Wand bzw. des Zauns anordbar sind, wobei wenigstens ein Modul durch wenigstens zwei Untermodule mit Hilfe einer entlang einer Längsseite der Untermodule angeordneten Klipsverbindung zusammengesetzt ist, und wobei bevorzugt die Untermoduldichtung nach außen nicht sichtbar angeordnet ist.

Durch die Zusammensetzung eines Moduls durch zwei Untermodule mittels einer Klipsverbindung und mindestens einer innen liegender Dichtung ist es möglich, eine Hochwasserschutzwand, einen Zaun bzw. eine Zaun-Wand-Kombination bereit zu stellen, welche(r) je nach Einsatzgebiet - ob stationär oder mobil - zusammensetzbar ist und durch die innen liegende Dichtung(en) besonders verschleißresistent ist.

Durch die Anordnung der Dichtungen sind diese bei zusammengesetzten Wandmodulen bzw. Zaunmodulen unzugänglich angeordnet, so dass es zu keiner Beschädigung der Dichtungen oder zu Verunreinigungen an den Dichtungen kommen kann, welche die Dichtheit der Abdichtung der Wandmodule bzw. Zaunmodule und damit auch der ganzen Wand beeinträchtigen könnten. Auch sind die Dichtungen weniger der Sonnenstrahlung ausgesetzt, die das Dichtungsmaterial spröde werden lässt. Die Klipsverbindung stellt zudem eine einfache Verbindbarkeit der Untermodule dar, insbesondere da zur Verbindung der Untermodule bei einer reinen Klipsverbindung kein Werkzeug verwendet werden muss. Zudem müssen nur relativ klein ausgebildete Untermodule bevorratet werden, um beispielsweise eine Hochwasserschutzwand ausbilden zu können. Des Weiteren kann in gewissem Maße eine geeignete Vormontage von Wandmodulen bzw. Zaunmodulen erfolgen, um beispielsweise eine Hochwasserschutzwand schneller am Einsatzort aufstellen zu können.

Gemäß einer bevorzugten Ausführungsvariante sind die Untermodule nicht nur formschlüssig über eine Klipsverbindung miteinander verbunden, sondern auch noch kraftschlüssig. Eine kraftschlüssige Verbindung ist bevorzugt dadurch gebildet, dass der entlang einer Längsseite eines Untermoduls angeordnete Rastvorsprung der Klipsverbindung, welcher in eine entlang einer Längsseite eines weiteren Untermoduls angeordnete Rastaussparung eingreift, durch eine Schraube, einen Stift oder durch andere geeignete Mittel gegen die Lösrichtung der Klipsverbindung verspannt ist.

Gemäß einer noch weiter bevorzugten Ausführungsform wird durch den Rastvorsprung und die Rastaussparung der Untermodule ein Schraubenkanal gebildet, welcher durch Einführen einer Schraube geweitet wird, wodurch der Rastvorsprung des Untermoduls entgegen der Lösrichtung der Klipsverbindung verspannt wird.

Da eine hier beschriebene Kombination aus Klipsverbindung und kraftschlüssiger Verbindung aus dem Stand der Technik nicht bekannt ist, ist ein gegenüber der Hochwasserschutzwand, dem Zaun bzw. der Wand-Zaun-Kombination unabhängiger erfinderischer Aspekt ein Profil, welches wenigsten über eine oben beschriebene Rastaussparung und/oder einen Rastvorsprung für eine Klipsverbindung verfügt, welche(r) so ausgebildet ist, dass beim Zusammenfügen der Klipsverbindung ein Kanal gebildet wird, der zum Einführen einer Schraube, eines Stiftes oder anderer geeigneter Mittel geeignet ist und wodurch der Rastvorsprung des Profils entgegen die Lösrichtung der Klipsverbindung verspannbar ist.

Bei einem bevorzugt stationären Hochwasserschutzsystem ist die Wand gemäß einer Ausführungsform aus Untermodulen aufgebaut, welche sowohl über einen Rastvorsprung, als auch über eine Rastaussparung verfügen. Dementsprechend ist die Wand - abgesehen von einem Bodenprofil und ggf. einem oberen Abschlussprofil - durch ein einziges später untrennbares Modul gebildet, welches aus einer Mehrzahl von Untermodulen zusammengesetzt ist.

Bei einem bevorzugt mobilen Hochwasserschutzsystem ist bevorzugt ein Modul durch wenigsten zwei Untermodule gebildet, von denen eines entlang einer Stirnseite eine Rastausnehmung aufweist und auf seiner gegenüberliegenden Stirnseite eine Feder oder Nut besitzt, welche dazu ausgebildet ist, in die Feder oder Nut eines weiteren Moduls eingreifen zu können und eine lösbare und dichte Verbindung mit diesem einzugehen. Ein weiteres Untermodul besitzt gleichzeitig einen Rastvorsprung auf einer Stirnseite sowie auf seiner gegenüberliegenden Stirnseite eine Feder oder Nut, welche dazu ausgebildet ist, in die Feder oder Nut eines weiteren Moduls eingreifen zu können und eine lösbare und dichte Verbindung einzugehen.

Die beschriebene Klips- und Schraubverbindung insbesondere für die Verbindung von Profilen kann daher nicht nur besonders vorteilhaft zur Verbindung der Untermodule der Hochwasserschutzwand eingesetzt werden, sondern auch zum Beispiel für Rahmen, Türen, Fenster, Messestände und allen anderen Konstruktionen, wo bevorzugt Profile zur Herstellung eines mechanischen Trägers oder Tragwerks verbunden werden.

Nach einer vorteilhaften Ausgestaltung sind die Wandmodule bzw. Zaunmodule für die mobile Ausführungsvariante der Hochwasserschutzwand gleich ausgebildet, wobei an jedem Wandmodul bzw. Zaunmodul an einer Stirnseite eine Feder und an einer gegenüberliegenden Stirnseite eine Nut angeordnet ist. Dies macht die Herstellung von lediglich einem einheitlichen Wandmodul bzw. Zaunmodul erforderlich, was die Herstellungskosten reduziert. Zudem können auch drei oder mehrere gleich ausgebildete Wandmodule bzw. Zaunmodule zur Aufstellung einer Wand bzw. eines Zauns auf einfache Art und Weise miteinander verbunden werden. Besonders bevorzugt sind die Wandmodule darüber hinaus im Querschnitt symmetrisch aufgebaut. Das hat den Vorteil, dass man bei dem Aufbau eines Zaunes oder einer Hochwasserschutzwand nicht darauf achten muss, welche Seite des Zaunmoduls dem Wasser zugewandt sein soll und welche in die andere Richtung weisen soll.

Gemäß einer weiteren vorteilhaften Ausgestaltung ist wenigstens ein Stützpfosten gemäß einer der vorgenannten Ausgestaltungen des Stützpfosten oder einer beliebigen Kombination derselben ausgebildet und bildet zusammen mit den aus Untermodulen zusammengesetzten Modulen eine besonders bevorzugte Ausführungsform der Hochwasserschutzwand, des Zauns bzw. der Wand-Zaun-Kombination. Hiermit sind die oben mit Bezug auf den Stützpfosten genannten Vorteile entsprechend verbunden.

Mit Anspruch 15 wird eine Wand, insbesondere Hochwasserschutzwand, oder ein Zaun vorgeschlagen, aufweisend wenigstens zwei gegeneinander abgedichtet miteinander verbindbare Wandmodule bzw. Zaunmodule und zumindest zwei Stützpfosten, an denen die Wandmodule bzw. Zaunmodule zur Aufstellung der Wand bzw. des Zauns anordbar sind, dadurch gekennzeichnet, dass wenigstens ein Stützpfosten gemäß einer der vorgenannten Ausgestaltungen des Stützpfosten oder einer beliebigen Kombination derselben ausgebildet sind. Hiermit sind die oben mit Bezug auf den Stützpfosten genannten Vorteile entsprechend verbunden.

Die Erfindung betrifft zudem ein Wandmodul, welches aus zwei Untermodulen zusammengesetzt ist, die mit bevorzugt einer Klips- und Schraubverbindung miteinander kraft- und formschlüssig verbunden sind und mindestens eine, vorzugsweise aber zwei innen liegende Dichtung(en) aufweist. Gemäß einer Ausführungsform verfügt das Wandmodul über eine Nut und eine Feder und ist bevorzugt im Querschnitt symmetrisch aufgebaut. Zusätzlich weist das Wandmodul gemäß einer Ausführungsform eine Verspanneinrichtung auf, die es ermöglicht, die Wandmodule gegenüber den Pfosten und/oder gegenüber dem Boden zu verspannen.

Im Folgenden wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in unterschiedlicher Kombination miteinander einen Aspekt der Erfindung darstellen können. Es zeigen
- Figur 1:: eine schematische Darstellung eines Querschnitts durch ein Ausführungsbeispiel für einen erfindungsgemäßen Stützpfosten,
- Figur 2:: eine schematische Darstellung eines Horizontalschnitts durch ein Ausführungsbeispiel für eine erfindungsgemäße Wand in Form einer Hochwasserschutzwand,
- Figur 2a:: eine schematische Darstellung eines Horizontalschnitts durch ein weiteres Ausführungsbeispiel für eine erfindungsgemäße Wand in Form einer Hochwasserschutzwand,
- Figur 3:: eine schematische Darstellung eines Querschnitts durch ein weiteres Ausführungsbeispiel für einen erfindungsgemäßen Stützpfosten,
- Figur 4:: eine schematische Darstellung eines Horizontalschnitts durch ein weiteres Ausführungsbeispiel für eine erfindungsgemäße Wand in Form einer Hochwasserschutzwand,
- Figur 5:: eine schematische Darstellung eines Querschnitts durch ein weiteres Ausführungsbeispiel für einen erfindungsgemäßen Stützpfosten,
- Figur 6:: eine schematische Darstellung eines Querschnitts durch ein weiteres Ausführungsbeispiel für einen erfindungsgemäßen Stützpfosten,
- Figur 7a:: eine schematische Darstellung eines Horizontalschnitts durch ein weiteres Ausführungsbeispiel für eine erfindungsgemäße Wand in Form einer Hochwasserschutzwand,
- Figur 7b:: eine schematische Darstellung eines Horizontalschnitts durch ein weiteres Ausführungsbeispiel für eine erfindungsgemäße Wand in Form einer Hochwasserschutzwand,
- Figur 7c:: eine schematische Darstellung eines Horizontalschnitts durch ein weiteres Ausführungsbeispiel für eine erfindungsgemäße Wand in Form einer Hochwasserschutzwand, und
- Figur 8:: eine schematische Seitenansicht der in Figur 7 gezeigten Wand.
- Figur 9a:: einen Querschnitt durch ein Ausführungsbeispiel für ein erfindungsgemäßes, bevorzugt mobil verwendbares Wandmodul bzw. Zaunmodul im nicht montiertem Zustand,
- Figur 9b:: einen Querschnitt durch ein Ausführungsbeispiel für ein erfindungsgemäßes, bevorzugt mobil verwendbares Wandmodul bzw. Zaunmodul in montiertem Zustand,
- Figur 10:: einen Querschnitt durch ein Ausführungsbeispiel für ein erfindungsgemäßes, bevorzugt stationär verwendbares Wandmodul bzw. Zaunmodul im zusammengesetzten Zustand,
- Figur 11a:: eine erste Ausführungsform eines Bodenabschlussmoduls,
- Figur 11b:: eine zweite Ausführungsform eines Bodenabschlussmoduls,
- Figur 11c:: eine dritte Ausführungsform eines Bodenabschlussmoduls,
- Figur 12:: einen Querschnitt durch ein Ausführungsbeispiel des selbständig erfinderischen Stützpfostens,
- Figur 13:: eine zweite Ausführungsform des selbständig erfinderischen Stützpfostens,
- Figur 14a:: eine Draufsicht auf die Wand mit Stützpfosten nach Figur 12 an einer Toröffnung montiert,
- Figur 14b:: eine Draufsicht auf die Wand mit Stützpfosten nach Figur 12 auf eine zweite Weise an einer Toröffnung montiert.

Der Stützpfosten 1 weist des Weiteren zwei parallel zur Längserstreckung des Stützpfostens 1 verlaufend jeweils zwischen einem Schenkel 2 bzw. 3 und dem Randabschnitt 31 bzw. 32 des Wandelementes 30 angeordnete separate Profile 9 bzw. 10 auf. An den dem jeweiligen Schenkel 2 bzw. 3 abgewandten Seiten der separaten Profile 9 bzw. 10 ist jeweils eines der Dichtelemente 4 bzw. 5 angeordnet. Die aus einem Dichtelement 4 bzw. 5 und einem separaten Profil 9 bzw. 10 gebildete Baugruppe 11 bzw. 12 ist derart ausgebildet, dass sie unter Erzeugung einer auf das jeweilige Dichtelement 4 bzw. 5 einwirkenden Klemmkraft quer zur Längserstreckung des Stützpfostens 1 zwischen den jeweiligen Schenkel 2 bzw. 3 und den Randabschnitt des Wandelementes eingeführt ist. An der dem jeweiligen separaten Profil 9 bzw. 10 abgewandten Seite des jeweiligen Dichtelementes 4 bzw. 5 sind zwei Dichtlippen 13 angeordnet.

Der Stützpfosten 1 umfasst zudem zwei Klemmeinrichtungen 14 und 15 mit jeweils einem Klemmglied 16 bzw. 17, die derart ausgebildet sind, dass ein Teil 18 bzw. 19 des jeweilig zwischen dem jeweiligen Schenkel 2 bzw. 3 und dem Randabschnitt 31 bzw. 32 des Wandelementes 30 eingeführten separaten Profils 9 bzw. 10 zwischen dem Klemmglied 16 bzw. 17 und dem Schenkel 2 bzw. 3 einklemmbar ist.

Jedes Klemmglied 16 bzw. 17 weist einen freien Endabschnitt 20 bzw. 21 und einen mit dem Steg 6 verbundenen Endabschnitt 22 bzw. 23 auf. Jedes Klemmglied 16 bzw. 17 ist derart ausgebildet, dass zumindest ein Teil des jeweiligen freien Endabschnitts 20 bzw. 21 bei zwischen dem jeweiligen Schenkel 2 bzw. 3 und dem Randabschnitt 31 bzw. 32 des Wandelementes 30 jeweilig eingeführten separaten Profils 9 bzw. 10 in körperlichem Kontakt mit einem an dem separaten Profil 9 bzw. 10 ausgebildeten Klemmabschnitt 24 bzw. 25 steht, wodurch der freie Endabschnitt 20 bzw. 21 über den Klemmabschnitt 24 bzw. 25 in Richtung des Schenkels 2 bzw. 3 mit einer Klemmkraft beaufschlagt wird. Der freie Endabschnitt 20 bzw. 21 des jeweiligen Klemmglieds 16 bzw. 17 ist als von dem jeweiligen Schenkel 2 bzw. 3 weg gerichtete Abwinklung ausgebildet.

Zwischen dem mit dem Steg 6 verbundenen Endabschnitt 22 bzw. 23 des jeweiligen Klemmglieds 16 bzw. 17 und dem jeweiligen Schenkel 2 bzw. 3 ist jeweils eine Aufnahme ausgebildet ist, in die der Teil 18 bzw. 19 des jeweiligen separaten Profils 9 bzw. 10 eingeführt ist, wobei an der dem jeweiligen Schenkel 2 bzw. 3 abgewandten Seite des freien Endes des jeweilig zwischen dem Klemmglied 16 bzw. 17 und dem Schenkel 2 bzw. 3 einklemmbaren Teils 18 bzw. 19 des separaten Profils 16 bzw. 17 jeweils eine Abschrägung 26 bzw. 27 angeordnet ist.

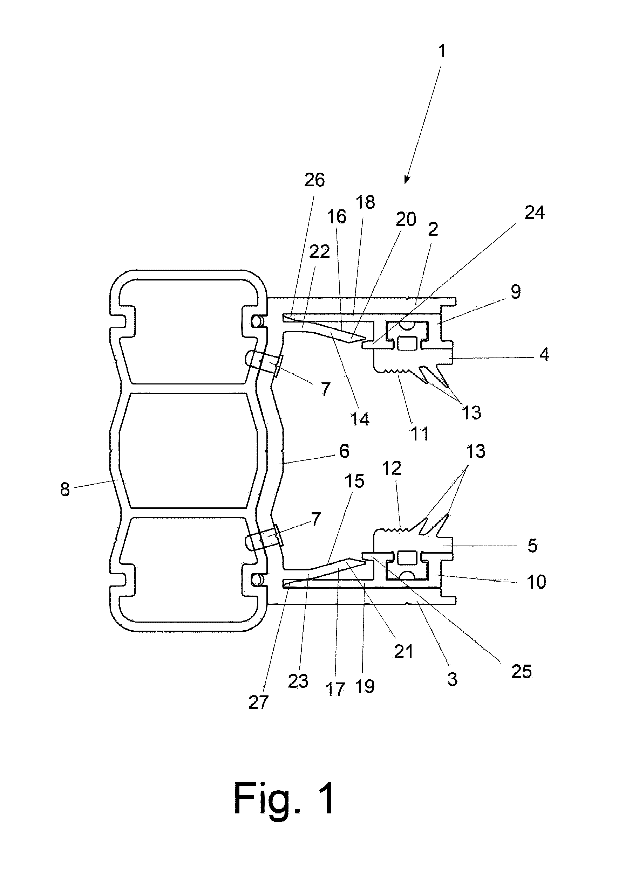

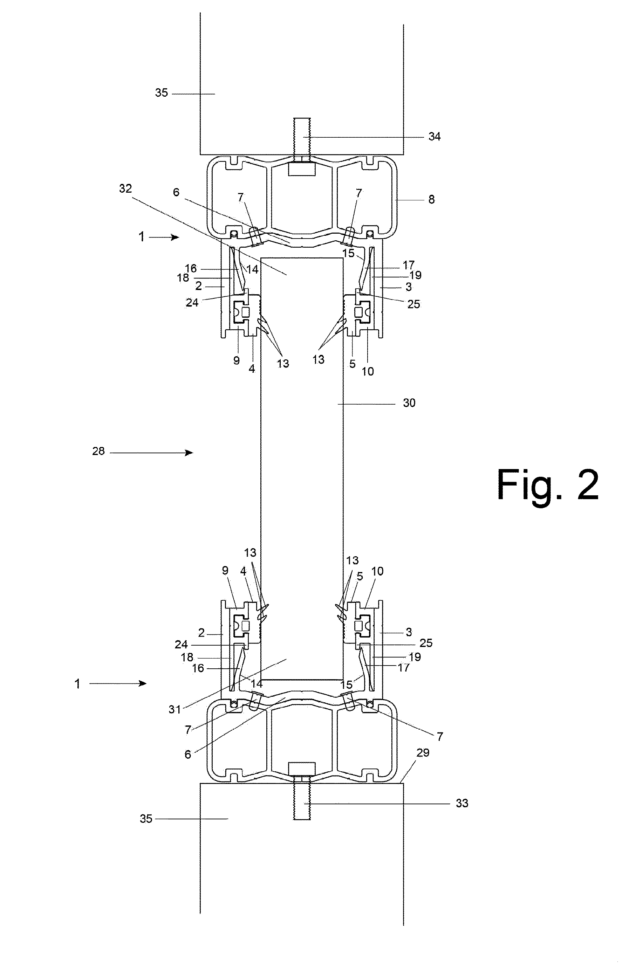

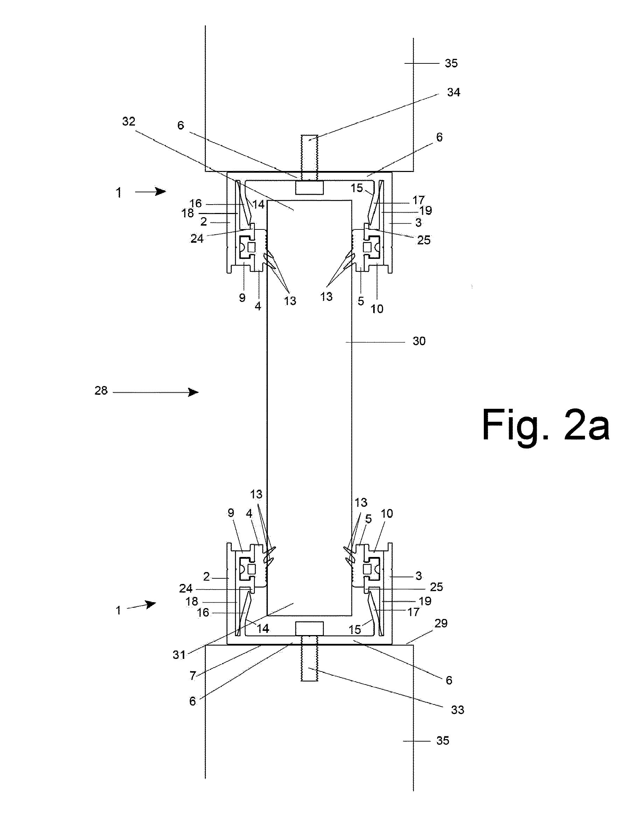

Figur 2 zeigt eine schematische Darstellung eines Horizontalschnitts durch ein Ausführungsbeispiel für eine erfindungsgemäße Wand 28 in Form einer Hochwasserschutzwand. Die Wand 28 ist in eine Tür-, Tor, oder Fensteröffnung 29 eingebaut. Die Wand 28 umfasst wenigstens ein Wandelement 30, dessen Randabschnitte 31 und 32 in jeweils einen Stützpfosten 1 eingeführt sind. Die Stützpfosten 1 bzw. deren Versteifungsprofile 8 sind jeweils über eine Schraubverbindung 33 bzw. 34 an der die Tür-, Tor, oder Fensteröffnung 29 umgebenden Wandung 35 befestigt. Aus Übersichtlichkeitsgründen sind in Figur 2 nicht alle Bezugszeichen aus Figur 1 dargestellt.

Figur 2a zeigt eine schematische Darstellung eines Horizontalschnitts durch ein weiteres Ausführungsbeispiel für eine erfindungsgemäße Wand 28 in Form einer Hochwasserschutzwand. Im Unterschied zu dem in Figur 2 gezeigten Ausführungsbeispiel weisen die Stützpfosten 1 keine Versteifungsprofile 8 auf. Die Stützpfosten 1 sind über ihre jeweiligen Stege 6 und die Schraubverbindungen 33 und 34 mit den Wandungen 35 verschraubt.

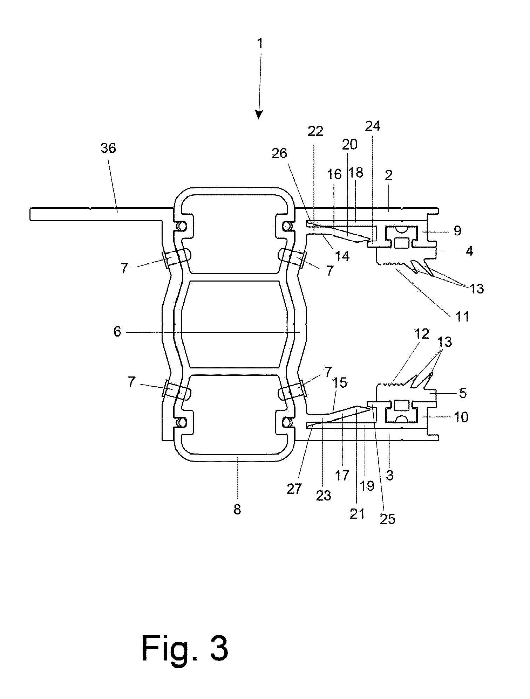

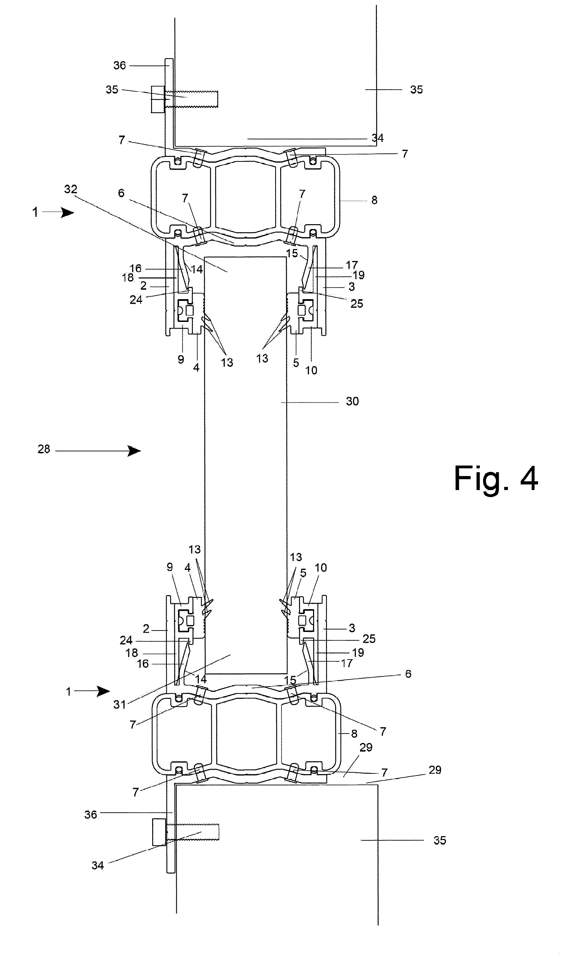

Figur 3 zeigt eine schematische Darstellung eines Querschnitts durch ein weiteres Ausführungsbeispiel für einen erfindungsgemäßen Stützpfosten 1. Zusätzlich zu dem in den Figuren 1 und 2 gezeigten Stützpfosten 1 umfasst der in Figur 3 gezeigte Stützpfosten 1 ein im Querschnitt winkelförmig ausgebildetes Befestigungselement 36, welches über Befestigungsmittel 7 an dem Versteifungsprofil 8 befestigt ist und über das der Stützpfosten 1 beispielsweise an einer eine Tür-, Tor, oder Fensteröffnung 29 umgebenden Wandung 35 befestigt werden kann, wie es in Figur 4 gezeigt ist.

Figur 4 zeigt eine schematische Darstellung eines Horizontalschnitts durch ein weiteres Ausführungsbeispiel für eine erfindungsgemäße Wand 28 in Form einer Hochwasserschutzwand. Statt des in Figur 1 gezeigten Stützpfostens 1 ist der in Figur 3 gezeigte Stützpfosten 1 zur Ausbildung der Wand 28 verwendet worden. Die Befestigungselemente 36 der Stützpfosten 1 sind über Schraubverbindungen 34 und 35 an den Wandungen 35 befestigt.

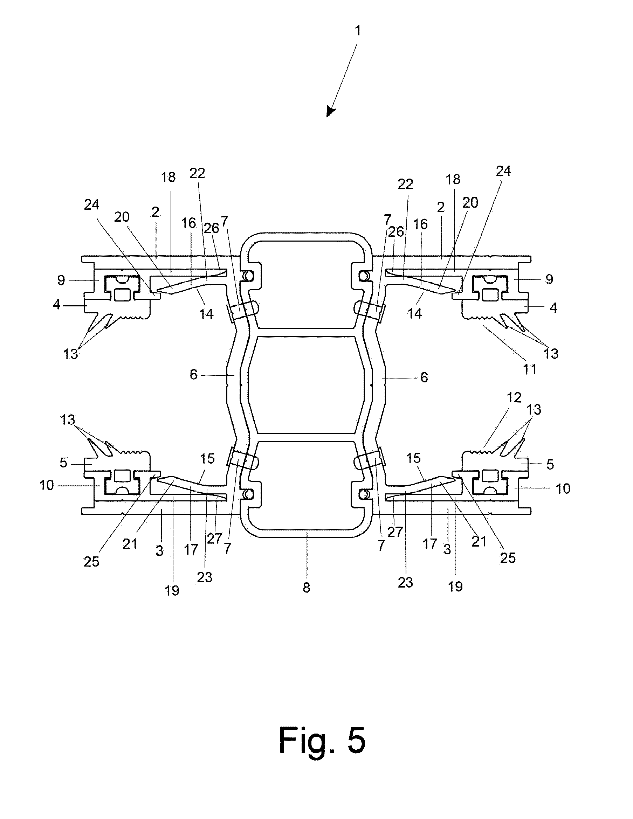

Figur 5 zeigt eine schematische Darstellung eines Querschnitts durch ein weiteres Ausführungsbeispiel für einen erfindungsgemäßen Stützpfosten 1. Dieser Stützpfosten unterscheidet sich von dem in Figur 1 gezeigten Stützpfosten 1 dadurch, dass auf einander gegenüberliegenden Seiten des Versteifungsprofils 8 die gleiche Baugruppe angeordnet ist, so dass von diesem Stützpfosten 1 beidseitig Wandelemente 30 gehalten werden können.

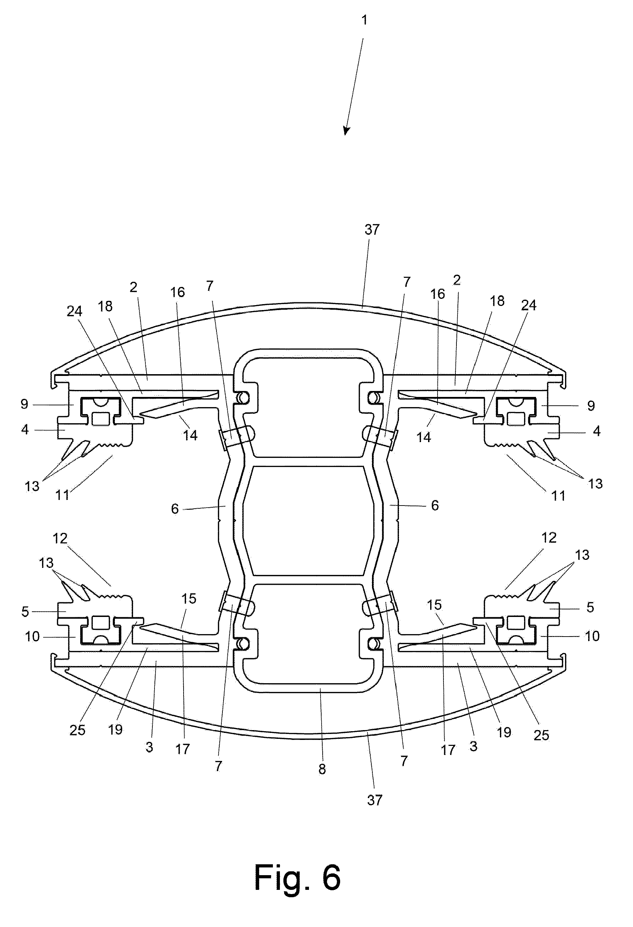

Figur 6 zeigt eine schematische Darstellung eines Querschnitts durch ein weiteres Ausführungsbeispiel für einen erfindungsgemäßen Stützpfosten 1. Dieser Stützpfosten 1 unterscheidet sich von dem in Figur 5 gezeigten Stützpfosten 1 dadurch, dass die Schenkel 2 bzw. 3 jeweils mit einem Abdeckelement 37 verbunden sind, wobei die Abdeckelemente 37 über einen Rastmechanismus an den Schenkeln 2 bzw. 3 festgelegt sind. Aus Übersichtlichkeitsgründen sind in Figur 6 nicht alle Bezugszeichen aus Figur 5 dargestellt.

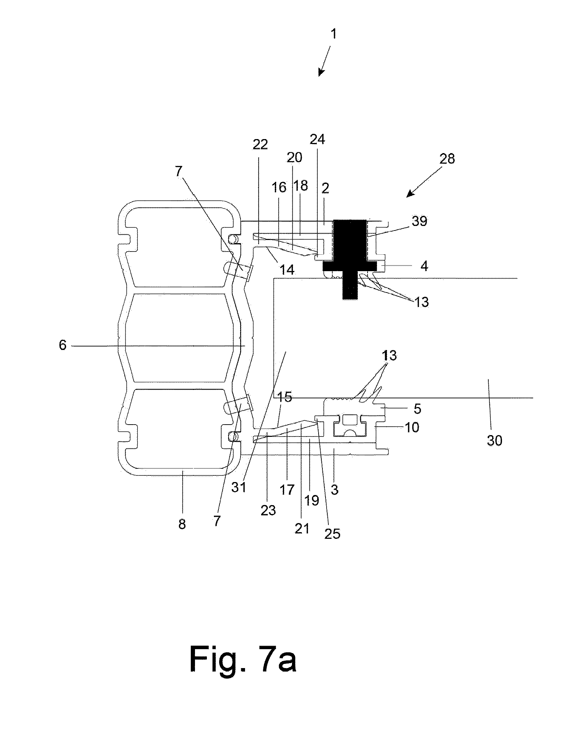

Figur 7a zeigt eine schematische Darstellung eines Horizontalschnitts durch ein weiteres Ausführungsbeispiel für eine erfindungsgemäße Wand 28 in Form einer Hochwasserschutzwand. Der Stützpfosten 1 unterscheidet sich dadurch von dem in Figur 1 gezeigten Stützpfosten 1, dass er eine sicherbare Verriegelungseinheit 38 aufweist, mit der das separate Profil 9 und der Randabschnitt 31 des Wandelementes 30 an dem Schenkel 2 arretierbar sind. Hierzu ist an dem Schenkel 2, dem separaten Profil 9 und dem Dichtelement 4 eine Bohrung 39 angeordnet, durch welche die Verriegelungseinheit 38 geführt ist.

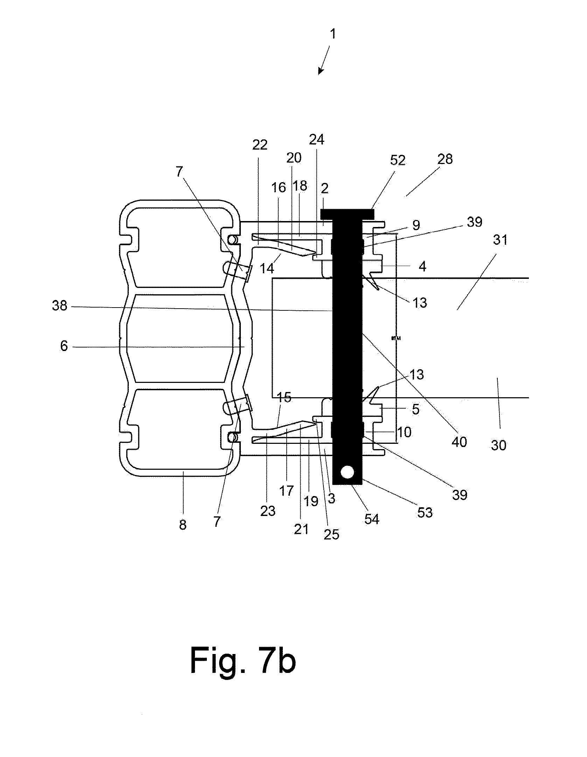

Figur 7b zeigt eine schematische Darstellung eines Horizontalschnitts durch ein weiteres Ausführungsbeispiel für eine erfindungsgemäße Wand 28 in Form einer Hochwasserschutzwand. Im Unterschied zu dem in Figur 7a gezeigten Ausführungsbeispiel ist die Verriegelungseinheit 38 als durchgehender Bolzen ausgebildet, der durch die Bohrungen 39 in den separaten Profilen 9 und 10 sowie die Dichtelemente 4 und 5 sowie durch eine an dem Wandelement 30 ausgebildete Bohrung 40 verläuft. Die Verriegelungseinheit 38 weist an einem Ende eine Aufweitung 52 und an dem anderen Ende einen Bolzenabschnitt 53 mit einer Querbohrung 54. An der Querbohrung 54 kann zur Sicherung der gezeigten Stellung der Verriegelungseinheit 38 ein nicht gezeigtes Schloss angeordnet werden.

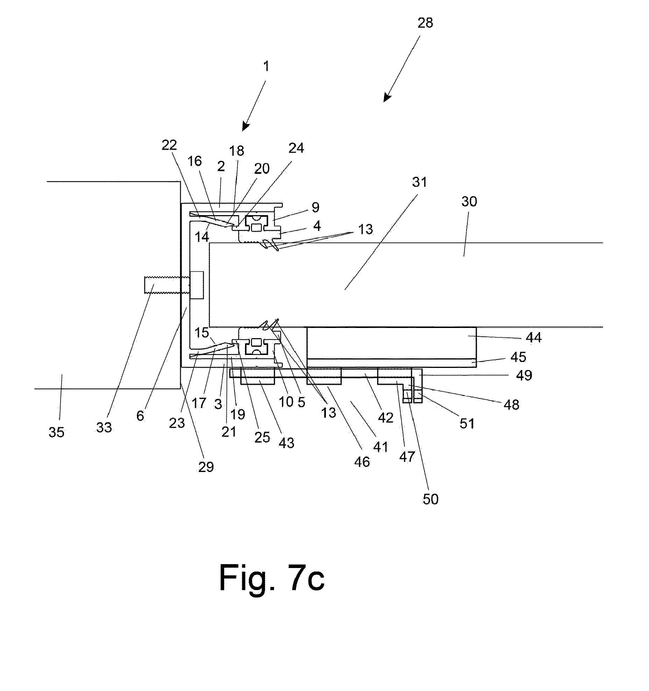

Figur 7c zeigt eine schematische Darstellung eines Horizontalschnitts durch ein weiteres Ausführungsbeispiel für eine erfindungsgemäße Wand 28 in Form einer Hochwasserschutzwand. Die Wand 28 umfasst eine Verriegelungseinrichtung 41, die einen an dem Wandelement 30 verschiebbar gelagerten Riegel 42 und eine an dem Schenkel 3 des Stützpfostens 1 angeordnete, bügelförmig ausgebildete Riegelaufnahme 43 aufweist. Des Weiteren umfasst die Verriegelungseinrichtung 41 eine Montageeinheit 44, an deren dem Wandelement 30 abgewandten Seite eine metallische Platte 45 angeordnet ist, an der wiederum zwei Bügel 46 und 47 angeordnet sind, an denen der Riegel 42 geführt ist. Der Bügel 47 und der Riegel 42 weisen jeweils eine Abwinklung 48 bzw. 49 auf, an denen jeweils eine Bohrung 50 bzw. 51 ausgebildet ist, an denen zur Sicherung der gezeigten Verriegelungsstellung der Verriegelungseinrichtung 41 ein nicht gezeigtes Schloss angeordnet werden kann.

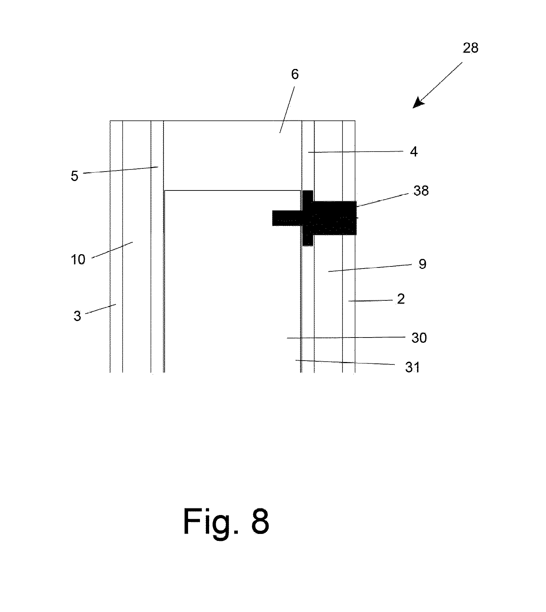

Figur 8 zeigt eine schematische Seitenansicht der in Figur 7 gezeigten Wand 28. Es ist zu erkennen, dass die Verriegelungseinheit 38 an einem oberen Endabschnitt des Wandelementes 30 der Wand 28 angreift. Bei einer mehrere übereinander angeordnete Wandelemente 30 aufweisenden Wand 28 greift die Verriegelungseinheit 38 bevorzugt an dem obersten Wandelement 30 an.

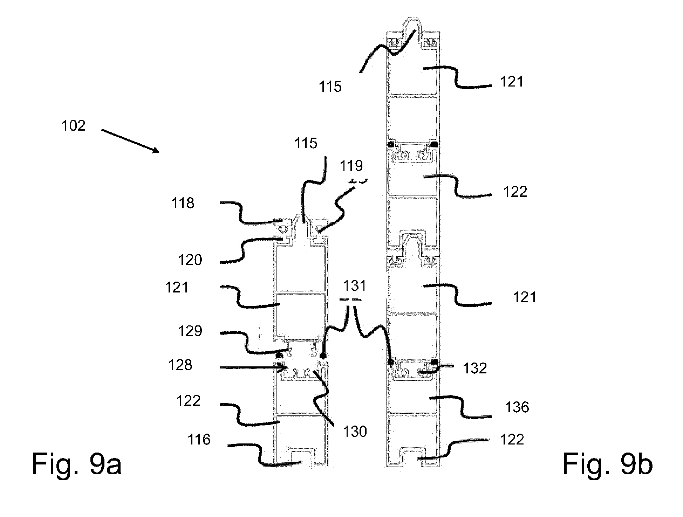

Figur 9a zeigt einen Querschnitt durch ein Ausführungsbeispiel für ein erfindungsgemäßes, bevorzugt mobil jedoch in bestimmten Anwendungsfällen auch stationär verwendbares Wandmodul 102 bzw. Zaunmodul 102 in nicht zusammengefügtem Zustand. Jedes Wandmodul 102 bzw. Zaunmodul 102 der in Figur 2 gezeigten Wand 28 bzw. des in Figur 2 gezeigten Zauns 28 ist entsprechend Figur 9a ausgebildet was bedeutet, dass die Wandmodule 102 bzw. Zaunmodule 102 gleich ausgebildet sind. An dem Wandmodul 102 bzw. Zaunmodul 102 ist an einer Stirnseite eine Feder 115 und an einer gegenüberliegenden Stirnseite eine Nut 116 angeordnet ist, wobei die Feder 115 und die Nut 116 komplementär zueinander ausgebildet sind. Hierdurch sind die Wandmodule 102 bzw. Zaunmodule 102 unter Ausbildung einer Nut-Feder-Verbindung miteinander verbindbar, sodass eine mobile Hochwasserschutzwand, Zaun oder Wand-Zaun-Kombination errichtet werden kann

Das Wandmodul 102 bzw. Zaunmodul 102 ist modular aus zwei gegeneinander abgedichteten, formschlüssig und kraftschlüssig miteinander verbundenen Untermodulen 121 und 122 aufgebaut, welche in Figur 9a getrennt voneinander dargestellt sind und in Figur 9b zusammengefügt dargestellt sind. Die Untermodule 121 und 122 sind derart ausgebildet, dass sie über eine Klipsverbindung 128 und eine Schraubverbindung formschlüssig und kraftschlüssig miteinander verbindbar sind. Hierzu sind an dem Untermodul 121 Rastvorsprünge 129 und an dem Untermodul 122 Rastausnehmungen 130 entlang jeweils einer Stirnseite der Untermodule 121,122 angeordnet. Beim Einführen der Rastvorsprünge 129 in die Rastausnehmungen 130 werden diese durch eine schräg verlaufende Führungskante zunächst nach Innen gedrückt und vorgespannt und rasten dann bei einer Verjüngung der Rastvorsprünge 129 in einer Verjüngung der Rastaussparungen 130 ein. Die Rastvorsprünge 129 des Untermoduls 121 sind dabei auf der einander zugewandten Seite konkav bzw. halb-hohlzylinderförmig ausgebildet und bilden zusammen mit zwei auf dem Profil des Untermodus 122 in den Rastausnehmungen 130 angeordneten Vorsprüngen 132, welche auf der einander abgewandten Seite konkav bzw. halb-hohlzylinderförmig ausgebildet sind einen Schraubenkanal, welcher dazu ausgebildet ist, eine Schraube, einen Stift oder vergleichbare Mittel aufzunehmen, wodurch der jeweilige Rastvorsprung 129 entgegen seiner Löserichtung verspannt und/oder gesichert werden kann. Die einzelnen Module 102, welche in dauerhafter Verbindung aus den Untermodule 121 und 122 zusammengesetzt sind, werden dann wie in Figur 9b dargestellt aufeinandergesetzt, wobei die Feder 115 eines Moduls 102 in die Nut 116 eines weiteren Moduls 102 eingreift. Durch eine in Figur 1 angedeutete Verspanneinrichtung 114 werden die einzelnen Module 102 dann im Einsatzfall bei der bevorzugt mobil (jedoch in manchen Anwendungsfällen auch stationär) errichteten Hochwasserschutzwand 28 aufeinander gedrückt, wobei die in den Befestigungsöffnungen 120 mittels Befestigungsvorsprung 119 befestigten Dichtungseinheiten 118 die Dichtheit der Hochwasserschutzwand 28 gewährleisten.

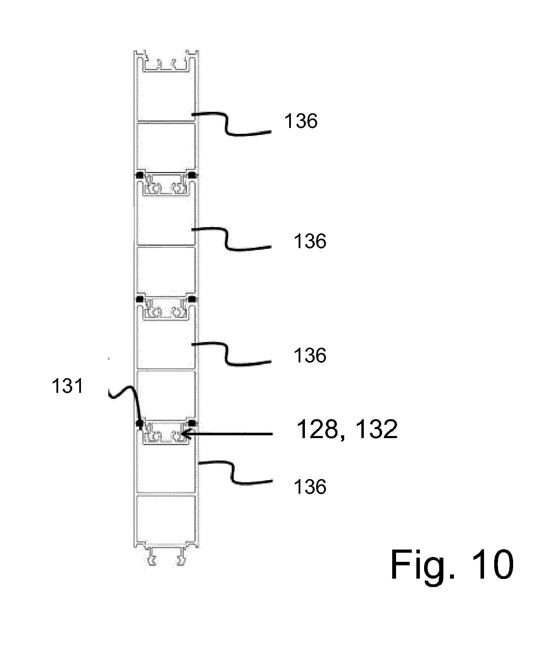

Figur 10 zeigt eine bevorzugt stationär, jedoch in einigen Anwendungsfällen auch mobil verwendbare (z. B mit einem Kran an den Aufstellungsort verbringbare) Ausführungsform der Hochwasserschutzwand 28. Die Wand 28 ist hierbei - abgesehen von einem Bodenmodul 133 durch ein einziges Wandmodul 102 gebildet, welches aus einer Vielzahl von gleich ausgebildeten Untermodulen 136 zusammengefügt ist. Dabei bewirkt die schon anhand der Figur 9a beschriebene Klipsverbindung 128 zusammen mit der durch Einführen einer Schraube in den durch die Rastvorsprünge 129 und die Vorsprünge 132 gebildeten Schraubenkanal eine kraftförmigen, dauerhafte Verbindung der Untermodule 136, welche aufgrund der innen und geschützt liegenden Untermoduldichtungen 131 auch über lange Zeit dicht bleibt.

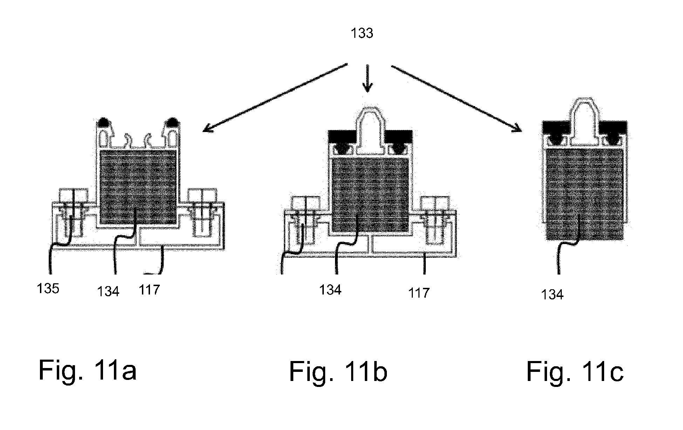

Figur 11a zeigt eine Ausführungsform eines Bodenmoduls 133 der erfindungsgemäßen Hochwasserschutzwand 28 in einer bevorzugt stationären, jedoch in bestimmten Anwendungsfällen auch mobil verwendbaren Ausprägung. Die Bodendichtung 134 ist in einem Bodenmodul 133 fixiert und wird hierbei mit Hilfe von Schrauben als Fixiermittel 135 mit einer im Boden befindlichen Bodenschiene 117 verspannt und abgedichtet. Die nach oben ausgerichteten Rastaussparungen des Bodenmoduls 133 ermöglichen eine feste Verbindung mit den Rastvorsprüngen 129 der Untermodule 122.

Figur 11b zeigt eine weitere Ausführungsform eines Bodenmoduls 133 der erfindungsgemäßen Wasserhochschutzwand 28 in einer bevorzugt mobil, jedoch in bestimmten Anwendungsfällen auch stationär verwendbaren Ausprägung. Im Gegensatz zu Figur 11a befindet sich hier am oberen Ende des Moduls eine Feder, welche in die Nut 116 eines weiteren Wandmoduls 102 eingreifen kann.

Figur 11c stellt eine weitere Variante des Bodenmoduls 133 in einer mobilen, jedoch in bestimmten Anwendungsfällen auch stationär verwendbaren Ausprägung dar. Der Unterschied zu der in Figur 11b beschriebenen Ausführung besteht darin, dass kein Verschrauben des Grundmoduls mit Fixiermitteln 135 und keine Bodenschiene 117 notwendig sind. Um die Bodendichtung 134 sicher auf den Boden zu drücken, wird die weiter oben beschriebene Verspanneinrichtung 114 verwendet.

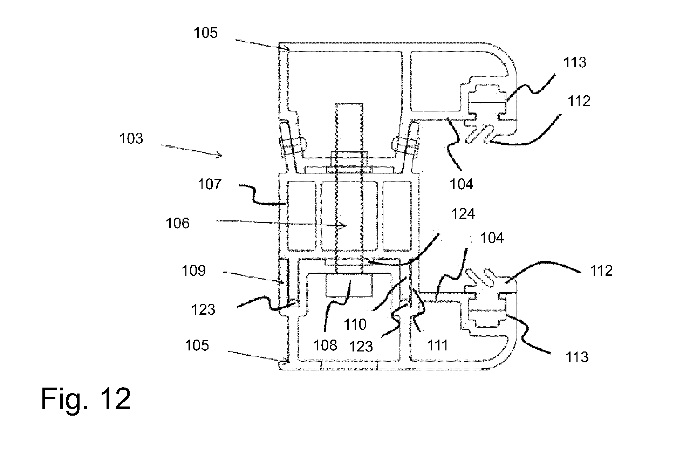

Figur 12 zeigt einen Querschnitt durch ein Ausführungsbeispiel für einen erfindungsgemäßen Stützpfosten 103. Der Stützpfosten 103 weist von parallel zueinander und beabstandet voneinander angeordneten Schenkeln 104 auf, zwischen denen zur Aufstellung der Wand 28 bzw. des Zauns 28 ein Randabschnitt von jedem Wandelement 102 bzw. Zaunelement 102 angeordnet werden kann.

Der Stützpfosten 103 weist eine Stelleinrichtung 106 auf, die derart ausgebildet und mit den Schenkeln 104 verbunden ist, dass mit ihr der Abstand der Schenkel 104 voneinander zum Einklemmen der zwischen den Schenkeln 104 angeordneten Randabschnitte der Wandmodule 2 bzw. Zaunmodule 102 zwischen den Schenkeln 104 variierbar ist.

Der Stützpfosten 103 umfasst eine sich in Längsrichtung des Stützpfostens 103 erstreckende Basiseinheit 107, an der ein Schenkel 104 zerstörungsfrei lösbar angeordnet ist, wobei der Abstand von wenigstens einem Schenkel 104 zu der Basiseinheit 107 mittels der Stelleinrichtung 6 variierbar ist. Der andere Schenkel ist mit der Basiseinheit 107 verbunden. Diese Verbindung kann u.a. z.B. durch Vernieten, Verschrauben, Verschweißen etc. erfolgen. Hier gezeigt ist eine Nietverbindung.

Die Stelleinrichtung 106 weist wenigstens einen Schraubmechanismus mit einer Schraube 108 auf. Die Schraube 8 erstreckt sich durch die Basiseinheit 107 und ist an dem nicht lösbaren Schenkel 104 gelagert. Um die Schraube herum ist zwischen der Basiseinheit 107 und dem Profil 105 des verschiebbaren Schenkels 104 eine Dichtung 124 angeordnet.

Jeder Stützpfosten 103 weist ferner zwei Führungseinrichtungen 109 auf, die derart ausgebildet und angeordnet sind, dass mit ihnen der zu verschiebende Schenkel 104, dessen Abstand zu der Basiseinheit 107 variierbar ist, während einer Bewegung relativ zu der Basiseinheit 107 zwangsgeführt wird. Hierzu weist jede Führungseinrichtung 109 zwei an der Basiseinheit 107 angeordnete Stege 110 und zwei an dem jeweiligen Profil 5 angeordnete Aufnahmen 111 auf. Zwischen den Stegen 110 und den Aufnahmen 111 ist jeweils eine Dichtung 123 angeordnet.

An den einander zugewandten Seiten der Schenkel 104 ist jeweils eine über die Länge der Schenkel 104 verlaufende Dichtung 112 angeordnet. An jedem Schenkel 4 ist eine Aufnahme 13 zum Halten der jeweiligen Dichtung 112 angeordnet.

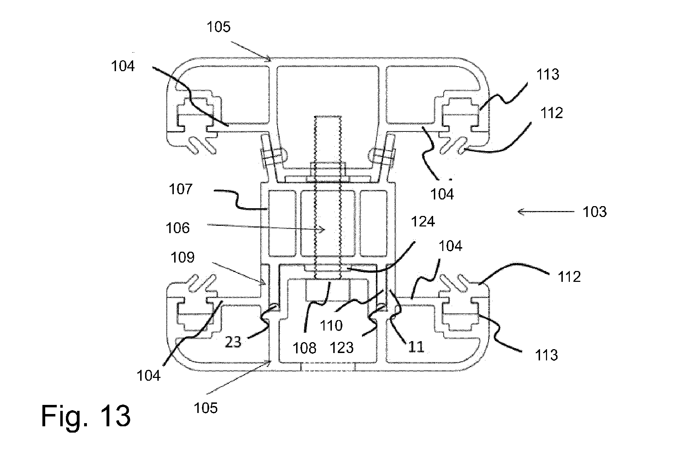

Figur 13 zeigt eine weitere Ausführungsform des erfindungsgemäßen Stützpfostens 103. Der hier dargestellte Stützpfosten 103 verfügt über zwei Paare an Schenkeln 104, welche dazu ausgebildet sind, zu beiden Seiten der Basiseinheit jeweils ein Wandmodul 102 einzuklemmen. Ein derartiger Pfosten 103 dient also dazu, die Hochwasserschutzwand 101 zu verlängern und besitzt meist keine Vorrichtung zur Befestigung des Stützpfostens 103 an einem Mauerwerk oder dergleichen.

Vorzugsweise ist der Stützpfosten nach Figur 12 oder 13 gekennzeichnet durch wenigstens eine sich in Längsrichtung des Stützpfostens 113 erstreckende Basiseinheit 117, an der die Schenkel 114 zerstörungsfrei lösbar angeordnet sind, wobei der Abstand von wenigstens einem Schenkel 114 zu der Basiseinheit 117 mittels der Stelleinrichtung 116 variierbar ist wobei durch wenigstens eine (hier dargestellt mehrere Führungseinrichtungen (9), derart ausgebildet und angeordnet sind, dass mit ihr der wenigstens ein Schenkel 114, dessen Abstand zu der Basiseinheit 117 variierbar ist, während einer Bewegung dieses Schenkels 114 relativ zu der Basiseinheit 117 zwangsgeführt wird.

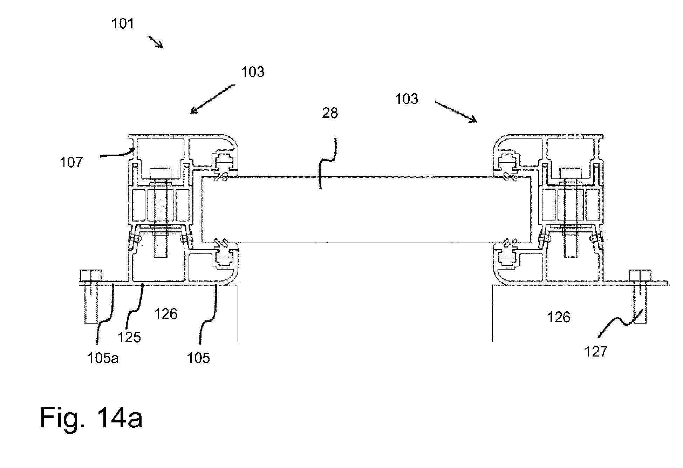

Figur 14a stellt ein erstes Beispiel dar, wie der in Figur 12 offenbarte Stützpfosten 103 mit dem Mauerwerk 126 einer Toreinfahrt verbunden werden kann. Das Profil 105 ist über die Verlängerung des Profils 105a, in welcher sich eine Bohrung befindet, mit Hilfe einer Schraube 127 im Mauerwerk verankert. Zwischen dem Mauerwerk 126 und dem offenbartem Stützpfosten 103, hier bestehend aus Profilen 105, Basiseinheit 107 und Profilverlängerung 105a, ist eine Dichtung 125 vorgesehen, welche verhindern soll, dass das Wasser zwischen dem Mauerwerk 126 und dem Stützpfosten 103 ungehindert passieren kann.

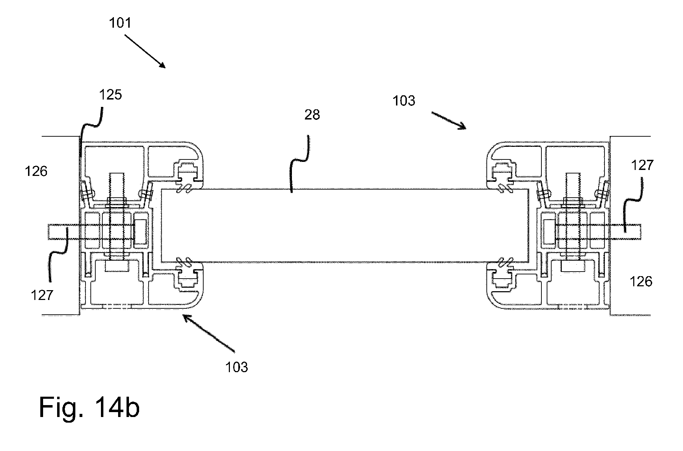

Figur 14b zeigt eine weitere Ausführung des Stützpfostens 103 nach Figur 12 und den damit verbundenen Möglichkeiten, den Stützpfosten 103 über Befestigungsmittel 127 im Mauerwerk zu verankern.

### Bezugszeichenliste:

- 1: Stützpfosten
- 2: Schenkel
- 3: Schenkel
- 4: Dichtelement
- 5: Dichtelement
- 6: Steg
- 7: Befestigungsmittel
- 8: Versteifungsprofil
- 9: separates Profil
- 10: separates Profil
- 11: Baugruppe
- 12: Baugruppe
- 13: Dichtlippe
- 14: Klemmeinrichtung
- 15: Klemmeinrichtung
- 16: Klemmglied
- 17: Klemmglied
- 18: Teil
- 19: Teil
- 20: freier Endabschnitt
- 21: freier Endabschnitt
- 22: Endabschnitt
- 23: Endabschnitt
- 24: Klemmabschnitt
- 25: Klemmabschnitt
- 26: Abschrägung
- 27: Abschrägung
- 28: Wand
- 29: Öffnung
- 30: Wandelement
- 31: Randabschnitt
- 32: Randabschnitt
- 33: Schraubverbindung
- 34: Schraubverbindung
- 35: Wandung
- 36: Befestigungselement
- 37: Abdeckelement
- 38: Verriegelungseinheit
- 39: Bohrung
- 40: Bohrung
- 41: Verriegelungseinrichtung
- 42: Riegel
- 43: Riegelaufnahme
- 44: Montageeinheit
- 45: Platte
- 46: Bügel
- 47: Bügel
- 48: Abwinklung
- 49: Abwinklung
- 50: Bohrung
- 51: Bohrung
- 52: Aufweitung
- 53: Bolzenabschnitt
- 54: Querbohrung 101 Wand, Zaun oder Wand-Zaun Kombination
- 102: Wandmodul oder Zaunmodul
- 103: Stützpfosten 104 Schenkel
- 105: Profil
- 105a: Verlängertes Profil
- 106: Stelleinrichtung
- 107: Basiseinheit
- 108: Schraube
- 109: Führungseinrichtung
- 110: Steg
- 111: Aufnahme
- 112: Dichtung
- 113: Aufnahme
- 114: Verspanneinrichtung
- 115: Feder
- 116: Nut
- 117: Bodenschiene
- 118: Dichtungseinheit
- 119: Befestigungsvorsprung
- 120: Befestigungsöffnung
- 121: Untermodul
- 122: Untermodul
- 123: Dichtung
- 124: Dichtung
- 125: Wanddichtung
- 126: Wand
- 127: Befestigungsmittel
- 128: Klipsverbindung
- 129: Rastvorsprung
- 130: Rastaussparung
- 131: Untermoduldichtung
- 132: Vorsprünge für Schraub-/ Steckkanal
- 133: Bodenmodul
- 134: Bodendichtung
- 135: Fixiermittel
- 136: Untermodul

## Patentansprüche

1. Stützpfosten (1) für eine Wand (28), insbesondere Hochwasserschutzwand, aufweisend wenigstens zwei parallel zueinander und beabstandet voneinander angeordnete Schenkel (2, 3), zwischen denen zur Aufstellung der Wand (28) ein Randabschnitt (31, 32) von zumindest einem Wandelement (30) anordbar ist, und wenigstens ein parallel zur Längserstreckung des Stützpfostens (1) verlaufend zwischen einem Schenkel (2, 3) und dem Randabschnitt (31, 32) des Wandelementes (30) im Anwendungsfall angeordnetes Dichtelement (4, 5), **gekennzeichnet durch** wenigstens ein parallel zur Längserstreckung des Stützpfostens (1) verlaufend zwischen dem Schenkel (2, 3) und dem Randabschnitt (31, 32) des Wandelementes (30) im Anwendungsfall angeordnetes separates Profil (9, 10), an dessen, dem Schenkel (2, 3) abgewandter Seite, das Dichtelement (4, 5) angeordnet ist, wobei die aus dem Dichtelement (4, 5) und dem separaten Profil (9, 10) gebildete Baugruppe (11, 12) derart ausgebildet und angeordnet ist, dass sie unter Erzeugung einer auf das Dichtelement (4, 5) einwirkenden Klemmkraft quer zur Längserstreckung des Stützpfostens (1) zwischen den Schenkel (2, 3) und den Randabschnitt (31, 32) des Wandelementes (30) im Anwendungsfall eingeführt ist.

2. Stützpfosten (1) nach Anspruch 1, **gekennzeichnet durch** wenigstens eine Klemmeinrichtung (14, 15) mit zumindest einem Klemmglied (16, 17), die derart ausgebildet ist, dass ein Teil (18, 19) des zwischen dem Schenkel (2, 3) und dem Randabschnitt (31, 32) des Wandelementes (30) eingeführten separaten Profils (9, 10) zwischen dem Klemmglied (16, 17) und dem Schenkel (2, 3) einklemmbar ist.

3. Stützpfosten (1) nach Anspruch 2, **dadurch gekennzeichnet, dass** das Klemmglied (16, 17) einen freien Endabschnitt (20, 21) und einen mit dem separaten Profil (9, 10) oder mit einem die beiden Schenkel (2, 3) miteinander verbindenden Steg (6) verbundenen Endabschnitt (22, 23) aufweist, wobei das Klemmglied (16, 17) derart ausgebildet ist, dass zumindest ein Teil des freien Endabschnitts (20, 21) bei zwischen dem Schenkel (2, 3) und dem Randabschnitt (31, 32) des Wandelementes (30) eingeführten separaten Profils (9, 10) in körperlichem Kontakt mit einem an dem separaten Profil (9, 10) ausgebildeten Klemmabschnitt (24, 25) steht, wodurch der freie Endabschnitt (20, 21) über den Klemmabschnitt (24, 25) in Richtung des Schenkels (2, 3) mit einer Klemmkraft beaufschlagt wird.

4. Stützpfosten (1) nach Anspruch 3, **dadurch gekennzeichnet, dass** der freie Endabschnitt (20, 21) des Klemmglieds (16, 17) als von dem Schenkel (2, 3) weg gerichtete Abwinklung ausgebildet ist.

5. Stützpfosten (1) nach Anspruch 3 oder 4, **dadurch gekennzeichnet, dass** zwischen dem mit dem separaten Profil (9, 10) bzw. dem Steg (6) verbundenen Endabschnitt (22, 23) und dem Schenkel (2, 3) eine Aufnahme ausgebildet ist, in die der Teil (18, 19) des separaten Profils (9, 10) einführbar ist, wobei an der dem Schenkel (2, 3) abgewandten Seite des freien Endes des zwischen dem Klemmglied (16, 17) und dem Schenkel (2, 3) einklemmbaren Teils (18, 19) des separaten Profils (9, 10) eine Abschrägung (26, 27) angeordnet ist.

6. Stützpfosten (1) nach einem der vorangehenden Ansprüche, **dadurch gekennzeichnet, dass** an der dem separaten Profil (9, 10) abgewandten Seite des Dichtelementes (4, 5) wenigstens eine Dichtlippe (13) angeordnet ist.

7. Stützpfosten (1) nach einem der vorangehenden Ansprüche, **gekennzeichnet durch** wenigstens ein parallel und beabstandet zur Längserstreckung des Stützpfostens (1) anordbares, mit den Schenkeln (2, 3) verbindbares Versteifungsprofil (8).

8. Stützpfosten (1) nach einem der vorangehenden Ansprüche, **gekennzeichnet durch** wenigstens ein mit zumindest einem Schenkel (2, 3) und/oder dem Versteifungsprofil (8) verbindbares Abdeckelement (37).

9. Stützpfosten (1) nach einem der vorangehenden Ansprüche, **gekennzeichnet durch** wenigstens eine sicherbare Verriegelungseinheit (38), mit der das separate Profil (9, 10) und der Randabschnitt (31, 32) des Wandelementes (30) an wenigstens einem Schenkel (2, 3) arretierbar sind.

10. Wand (28), insbesondere Hochwasserschutzwand, oder Zaun (28), aufweisend wenigstens ein Wandmodul (1) bzw. Zaunmodul (102) und zumindest zwei Stützpfosten (1), an denen das Wandmodul 102) bzw. Zaunmodul oder die Wandmodule (102) bzw. Zaunmodule (102) zur Aufstellung der Wand (28) bzw. des Zauns (28) anordbar sind, wobei wenigstens ein Modul (102) durch wenigstens zwei Untermodule (121, 122, 136) mit Hilfe einer entlang einer Längsseite der Untermodule verlaufenden Klipsverbindung (128) zusammengesetzt ist.

11. Wand (28) nach Anspruch 10, **dadurch gekennzeichnet, dass** zwischen den Untermodulen (121, 122, 136) wenigstens eine Untermoduldichtung (131) vorgesehen ist, die nach außen nicht sichtbar angeordnet ist.

12. Wand (28) nach einem der Ansprüche 10 oder 11, **dadurch gekennzeichnet, dass** die Untermodule (121, 122, 136) zusätzlich zur formschlüssigen Klipsverbindung (128) kraftschlüssig miteinander verbunden sind.

13. Wand (28) nach einem der Ansprüche 10 bis 12, **dadurch gekennzeichnet, dass** wenigsten ein Untermodul (121,136) zwei Rastvorsprünge (129) aufweist, die auf der einander zugewandten Seite konkav bzw. halb-hohlzylinderförmig ausgebildet sind und zusammen mit zwei auf dem Profil eines weitere Untermodus (122,136) in den Rastausnehmungen (130) angeordneten Vorsprüngen (132), welche auf der einander abgewandten Seite konkav bzw. halb-hohlzylinderförmig ausgebildet sind einen Schraubenkanal bilden, welcher dazu ausgebildet ist, eine Schraube, einen Stift oder vergleichbare Mittel aufzunehmen, wodurch der jeweilige Rastvorsprung (129) entgegen seiner Löserichtung verspannt und/oder gesichert werden kann.

14. Wand (28) bzw. Zaun (28) nach einem der Ansprüche 10 bis 13, **dadurch gekennzeichnet, dass** wenigstens ein Stützpfosten (1) gemäß einem der Ansprüche 1 bis 9 ausgebildet ist.

15. Wand (28), insbesondere Hochwasserschutzwand, oder Zaun (28), aufweisend wenigstens zwei gegeneinander abgedichtet miteinander verbindbare Wandmodule (102) bzw. Zaunmodule (102) und zumindest zwei Stützpfosten (1), an denen die Wandmodule (102) bzw. Zaunmodule (102) zur Aufstellung der Wand (102) bzw. des Zauns (102) anordbar sind, **dadurch gekennzeichnet, dass** wenigstens ein Stützpfosten (1) gemäß einem der Ansprüche 1 bis 9 ausgebildet ist.

16. Wandmodul (102) für eine Hochwasserschutzwand oder einen Zaun nach Anspruch 15, **dadurch gekennzeichnet, dass** das Wandmodul (102) mit Hilfe einer entlang einer Längsseite der Untermodule (121, 122, 136) verlaufenden Klipsverbindung (128) zusammengesetzt ist.
